# EUROPÄISCHE PATENTANMELDUNG

(11) **EP 3 128 053 A1**
(43) Veröffentlichungstag der Anmeldung: **08.02.2017**
(21) Anmeldenummer: 16180090.9
(22) Anmeldetag: 19.07.2016
(51) Int. Cl.: D01G 19/26, F16G 5/20

(54) **ANTRIEBSVORRICHTUNG EINER KÄMMMASCHINE**

(30) Priorität: 05.08.2015 CH 11322015
(71) Anmelder: MASCHINENFABRIK RIETER AG, 8406 Winterthur (CH)
(72) Erfinder: Peulen, Jacques, 8630 Rüti (CH); Furrer, Fabian, 8406 Winterthur (CH); Fuster, Christian, 8400 Winterthur (CH)

(57) **Zusammenfassung**

Die Erfindung bezieht sich auf eine Antriebsvorrichtung (10) zwischen einem eine Ausgangswelle (12) aufweisenden Motor und einer eine Eingangswelle (16) aufweisenden Getriebeeinheit einer Kämmmaschine von welcher Arbeitselemente der Kämmmaschine angetrieben werden, wobei auf der Ausgangswelle (12) des Motors eine Motor-Riemenscheibe (22) und auf der Eingangswelle (16) der Getriebeeinheit eine Getriebe-Riemenscheibe (24) angeordnet sind, und wobei ein Antriebsmittel (26) kraftschlüssig mit der Motor-Riemenscheibe (22) und Getriebe-Riemenscheibe (24) zusammenwirkt. Erfindungsgemäss ist das Antriebsmittel (26) als Keilrippenriemen (26B), insbesondere Poly-V-Riemen (26B'), ausgebildet.

## Beschreibung

Die Erfindung bezieht sich auf eine Antriebsvorrichtung zwischen einem eine Ausgangswelle aufweisenden Motor und einer eine Eingangswelle aufweisenden Getriebeeinheit einer Kämmmaschine von welcher Arbeitselemente der Kämmmaschine angetrieben werden, wobei auf der Ausgangswelle des Motors eine Motor-Riemenscheibe und auf der Eingangswelle der Getriebeeinheit eine Getriebe-Riemenscheibe angeordnet sind, und wobei ein Antriebsmittel kraftschlüssig mit der Motor-Riemenscheibe und Getriebe-Riemenscheibe zusammenwirkt.

Aus der CH-PS 499 635 ist ein mechanisches Antriebssystem zur Durchführung einer Pilgerschrittbewegung an den Abreisszylindern, eine Hin- und Her-Bewegung von Zangen eines Zangenaggregats und eine ungleichförmige Bewegung eines Rundkamms an einer Kämmmaschine zu entnehmen. Das mechanische Antriebssystem weist eine Getriebeeinheit mit einer Eingangswelle auf, wobei die Eingangswelle ihren Antrieb von einem Motor über eine Keilriemenscheibe erhält. Auf diese Art und Weise konnten mit der damaligen Kämmmaschine bis zu 350 Kammspiele pro Minute (KS/min) durchgeführt werden, wobei als Antriebsmittel ein einziger Keilriemen zum Einsatz kam.

Die heutigen Kämmmaschinen führen hingegen bis zu 600 KS/min durch, so dass die Anforderungen an das Antriebssystem immer mehr in kritische Bereiche der erforderlichen Antriebsmomente vorstösst. Insbesondere die Pilgerschrittbewegung an den Abreiszylindern, die Hin- und Her-Bewegung der Zangen des Zangenaggregates und die ungleichförmige Bewegung des Rundkamms an den heutigen Kämmmaschinen führen zu ungleichmässigen Schwingungen im Bereich der Eigenfrequenz des Antriebssystems. Auf diese Art und Weise entstehen bei den heutigen Kämmmaschinen sehr hohe Lastspitzen, insbesondere hohe Drehmomentspitzen und erhöhte Beschleunigungskräfte, welche letztendlich von den Arbeitselementen der Kämmmaschine und den Lagerstellen der Antriebsvorrichtung aufgenommen werden müssen. Um den hohen Lastspitzen im Antriebssystem entgegen zu wirken kommen für die heutigen Kämmmaschinen mit bis zu 600 KS/min üblicherweise Doppelkeilriemen als Antriebsmittel zum Einsatz.

An dieser Stelle sei erwähnt, dass in der vorliegenden Anmeldung unter dem Begriff Arbeitselemente der Kämmmaschine z. B. die Arbeitselemente zum Antrieb des Zangenaggregates und/oder die Arbeitselemente zum Antrieb des Abreisszylinders und/oder die Arbeitselemente für den Antrieb des Rundkamms gemeint sind.

Die ungleichmässigen Schwingungen von der Getriebeeinheit der Kämmmaschine zusammen mit den sehr hohen Lastspitzen auf die Arbeitselemente der Kämmmaschine und Lagerstellen der Antriebsvorrichtung führen zwischen dem Doppelkeilriemen und den Keilriemenscheiben des Motors sowie der Getriebeeinheit an den heutigen Kämmmaschinen zu erhöhtem Schlupf. Dies zeigt sich insbesondere durch ein sehr starkes Schwingverhalten oder Flattern im Zugtrum des Doppelkeilriemens zwischen dem Motor und der Getriebeeinheit.

Das sehr starke Schwingverhalten des Doppelkeilriemens führt insbesondere dazu, dass der Motor eine höhere Leistung aufbringen muss, um die Getriebeeinheit der Kämmmaschine anzutreiben, wodurch sehr hohe Dehnungsänderungen auf den Doppelkeilriemen wirken, was wiederum deren Lebensdauer erheblich herabsetzt.

Der Doppelkeilriemen wirkt aufgrund des sehr starken Schwingverhaltens des Antriebssystems wie eine eingespannte Saite, die in ihrer Eigenfrequenz schwingt, was zu einem unerwünschten Lärmpegel führt.

Der Erfindung liegt somit die Aufgabe zugrunde, eine Antriebsvorrichtung zwischen einem Motor und einer Getriebeeinheit einer Kämmmaschine bereitzustellen, welche eine verbesserte Antriebsübertragung ermöglicht und den Verschleiss des Antriebsmittels sowie den unerwünschten Lärmpegel minimiert.

Zur Lösung der Aufgabe wird nunmehr vorgeschlagen, dass das Antriebsmittel als Keilrippenriemen, insbesondere Poly-V-Riemen, ausgebildet ist. In vorteilhafter Weise erlaubt der Keilrippenriemen im Vergleich zum Keilriemen einen geringeren Umschlingungswinkel mit der Motor-Riemenscheibe ebenso wie mit der GetriebeRiemenscheibe. Dies hat zur Folge, dass die ungleichmässigen Schwingungen von der Getriebe-Riemenscheibe mit einer geringeren Kraftübertragung auf das Zugtrum einwirken und somit auch die mechanischen Belastungen auf die Lager des Getriebes und des Motors erheblich abgefedert werden. Des Weiteren entsteht weniger Flattern des Riemens und wegen der grossen Umschlingung entsteht weniger Schlupf, wodurch eine bessere Übertragung der Motorleistung erzielt wird.

Es konnte durch Verwendung des Keilrippenriemens die Arbeitsleistung des Motors um 150 W bis 200 W gesenkt werden. Auch wurde in vorteilhafter Weise festgestellt, dass sich die Drehmomentspitze an der Ausgangswelle des Motors um zwischen etwa 15% bis etwa 20% verbessert hat. Auch konnte ein erhöhter Wirkungsgrad mit dem Keilrippenriemen erzielt werden. Der Keilrippenriemen hat seine Vorteile insbesondere bei Kämmmaschinen mit Kämmspielzahlen von bis zu 650 KS/min.

In vorteilhafter Weise hat sich gezeigt, dass ein Keilrippenriemen ein PJ-Profil mit zwischen 5 und 10 Rippen, vorzugsweise zwischen 7 und 9 Rippen, und besonders bevorzugt 8 Rippen aufweisen soll, um den ungleichmässigen Schwingungen von der Getriebeeinheit entgegen zu wirken.

Der Keilrippenriemen, insbesondere Poly-V-Riemen, mit dem PJ-Profil entspricht der Norm DIN 7867/ ISO 9982 und weist einen Unterbau, einen Zugstrang und eine Deckplatte auf. Der Unterbau weist keilförmige, parallel in Laufrichtung angeordnete Rippen auf. Diese Rippen gewährleisten einen guten Kraftschluss und eine gleichmässige Kraftverteilung über die gesamte Riemenbreite. Der Unterbau besteht aus einem Elastomer-Werkstoff. Der Zugstrang besteht aus einem Polyestercord bzw. Aramidcord von hoher Festigkeit sowie geringer Dehnung und ist mit dem Unterbau fest verbunden. Die verschleissfeste Druckplatte sorgt für einen dauerhaften Schutz des Zugstrangs.

Insbesondere das PJ-Profil hat einen Rippenabstand von ca. 2,34 mm und eine Riemenhöhe von ca. 3,8 mm.

Vorzugsweise weisen die Motor-Riemenscheibe und die Getriebe-Riemenscheibe auf ihrem jeweiligen äusseren Umfang ein gegengleiches Rippenprofil für den Keilrippenriemen auf. Dies ermöglicht eine optimale Kraftübertragung zwischen dem Keilrippenriemen und den Riemenscheiben. Auch die Keilrippenriemenscheibe sollte nach DIN 7867/ ISO 9982 gefertigt sein.

Bevorzugt ist mindestens eine Schwungscheibe auf der Eingangswelle der Getriebeeinheit radial aussen von der Getriebe-Riemenscheibe angeordnet. Dies hat den vorteilhaften Effekt, dass die Schwungscheibe die Lastspitzen im Antriebssystem abfedert.

Es hat sich in vorteilhafter Weise gezeigt, dass die Masseträgheit der mindestens einen Schwungscheibe zwischen etwa 84000 kg*mm2 und etwa 85000 kg*mm2, vorzugsweise zwischen etwa 84300 kg*mm2 und etwa 84800 kg*mm2, und besonders bevorzugt bei 84600 kg*mm2 liegen soll.

Des Weiteren sollte das Gewicht der mindestens einen Schwungscheibe zwischen etwa 7,0 kg und etwa 7,5 kg, vorzugsweise zwischen etwa 7,2 kg und etwa 7,4 kg, und besonders bevorzugt bei etwa 7,3 kg liegen. In diesem Zusammenhang sei jedoch erwähnt, dass ein derartiges Gewicht der Schwungscheibe auf der Eingangswelle der Getriebeeinheit mit einem langsamen Anfahren und Bremsen des Motors einhergehen dürfte und zudem eingehende Belastungen auf die Eingangswelle bewirkt, wobei diese Effekte eher geringer einzustufen sind als der dominierende Vorteil, dass das Schwingverhalten des Antriebssystems im Zugtrum erheblich minimiert werden kann.

Vorzugsweise wird vorgeschlagen, die Schwungscheibe einstückig oder mehrteilig auszubilden.

Zur weiteren Abfederung des Schwingverhaltens des Antriebssystems am Zugtrum ist in vorteilhafter Weise der Einsatz mindestens einer Umlenkrolle vorgesehen, wobei die Umlenkrolle mit dem Zugtrum des Antriebsmittels zusammen wirkt. Dies hat den vorteilhaften Effekt, dass der Zugtrum unterteilt wird. Entsprechend wirkt die Umlenkrolle im Zugtrum dem erhöhten Schlupf entgegen.

Weitere Vorteile der Erfindung sind anhand eines nachfolgend beschriebenen und gezeigten Ausführungsbeispiels zu entnehmen.
Es zeigen:
- Fig.1: eine schematische Seitenansicht einer Antriebsvorrichtung gemäss dem Stand der Technik,
- Fig. 2: eine Antriebsvorrichtung nach Fig. 1 mit einer erfindungsgemässen Ausführung des Antriebes,
- Fig. 3: einen Querschnitt durch eine Getriebe-Riemenscheibe nach Fig. 2,
- Fig. 4: eine graphische Darstellung des zeitlichen Verlaufs von Motor-Drehmomenten.

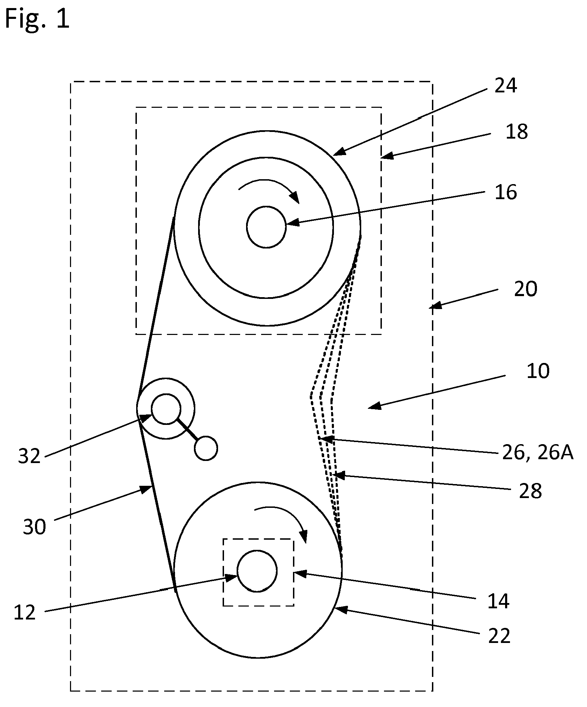

Fig. 1 zeigt rein schematisch eine Antriebsvorrichtung 10 zwischen einem eine Ausgangswelle 12 aufweisenden Motor 14 und einer eine Eingangswelle 16 aufweisenden Getriebeeinheit 18 einer Kämmmaschine 20 gemäss dem bekannten Stand der Technik. Zur besseren Veranschaulichung des Zusammenwirkens der Antriebsvorrichtung 10 mit dem Motor 14, der Getriebeeinheit 18 und der Kämmmaschine 20 sind diese Bauteile in Fig. 1 gestrichelt dargestellt. Mittels der Getriebeeinheit 18 werden Arbeitselemente (nicht gezeigt) der Kämmmaschine 20 angetrieben.

Als Arbeitselemente bei bekannten Kämmmaschinen sind z. B. die Arbeitselemente zum Antrieb des Zangenaggregates und/oder die Arbeitselemente zum Antrieb des Abreisszylinders und/oder die Arbeitselemente für den Antrieb des Rundkamms zu verstehen.

Auf der Ausgangswelle 12 des Motors 14 ist eine Motor-Riemenscheibe 22 und auf der Eingangswelle 16 der Getriebeeinheit 18 ist eine Getriebe-Riemenscheibe 24 angeordnet. Ein Antriebsmittel 26 wirkt kraftschlüssig mit der Motor-Riemenscheibe 22 und Getriebe-Riemenscheibe 24 zusammen.
Die Getriebeeinheit 18 der bekannten Kämmmaschine 20 treibt die Abreisszylinder für den Pilgerschritt, die Zangen des Zangenaggregates für die Hin- und Her-Bewegung und den Rundkamm für eine ungleichförmige Bewegung an. Diese Antriebe bewirken insbesondere bei heutigen Kämmmaschinen mit bis zu 600 KS/min eine ungleichmässige Schwingung auf das Antriebssystem und führen so zu unerwünschten Lastspitzen auf den Arbeitselementen der Kämmmaschine 20, der Ausgangswelle 12 des Motors 14 sowie der Eingangswelle 16 der Getriebeeinheit 18.

Beim bekannten Stand der Technik für Antriebsvorrichtungen einer Kämmmaschine gemäss Fig. 1 dient ein Doppelkeilriemen 26A als Antriebsmittel 20. Dieser Doppelkeilriemen 26A fängt bei bis zu 600 KS/min wegen der ungleichmässigen Schwingungen seitens der Getriebeeinheit 18 an zu Schwingen bzw. Flattern. Dieses sogenannte Flattern des Doppelkeilriemens 26A ist in Fig. 1 durch gepunktete Linien im Zugtrum 28 angedeutet.

Gemäss dem Stand der Technik ist es üblich, dass im Leertrum 30 der Antriebsvorrichtung 10 der bekannten Kämmmaschine eine Spannrolle 32 vorgesehen ist, wie in Fig. 1 ebenfalls gezeigt.

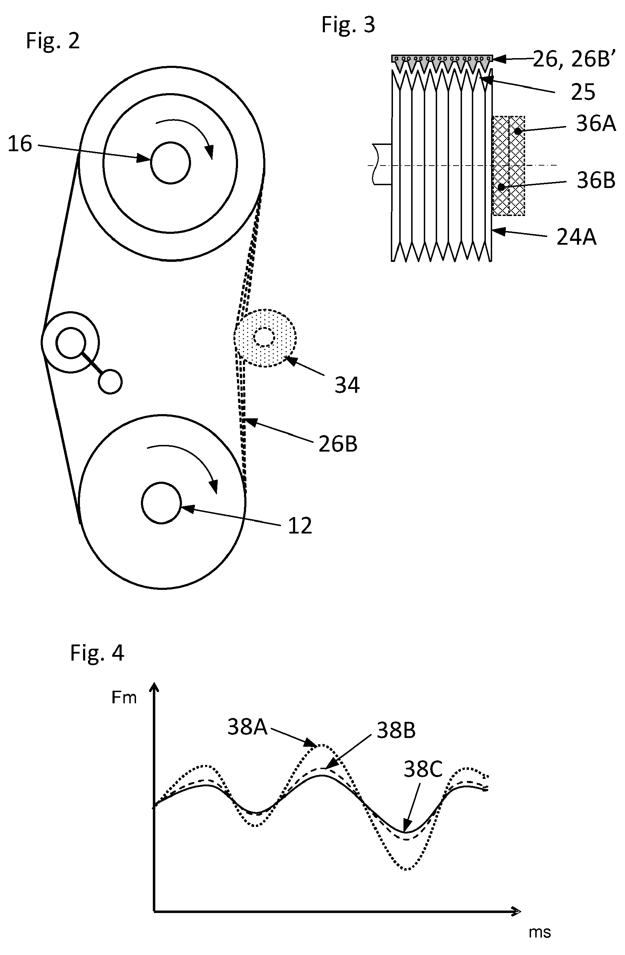

Um das aus dem Stand der Technik bekannte Problem des Flatterns des Doppelkeilriemens 26A mechanisch abzufedern werden in den nachfolgenden Fig. 2 und Fig. 3 entsprechende Lösungen vorgeschlagen.

Gemäss Fig. 2 wird, ausgehend vom bekannten Stand der Technik wie in Fig. 1 gezeigt, der Doppelkeilriemen 26A durch einen Keilrippenriemen 26B, insbesondere PolyV-Riemen 26B', ersetzt. Eine deutlichere Darstellung des Keilrippenriemens 26B als Antriebsmittel 26 ist in Fig. 3 im Detail gezeigt.

Der Einsatz des Keilrippenriemens 26B hat ein erheblich besseres Schwingverhalten (siehe Fig. 2 gepunktete Linie im Zugtrum 28) im Vergleich zum Doppelkeilriemen 26A gemäss Fig. 1.

Es hat sich als sehr vorteilhaft erwiesen, insbesondere den Poly-V-Riemen 26B' mit einem PJ-Profil und 8 Rillen zu verwenden. Es konnte durch Verwendung des Poly-V-Riemens 26B' des Typs PJ-8 die Arbeitsleistung des Motors um 150 W bis 200 W gesenkt werden. Auch wurde in vorteilhafter Weise festgestellt, dass sich die Drehmomentspitzen an der Ausgangswelle des Motors um zwischen etwa 15% bis etwa 20% verbessert haben. Auch konnte ein erhöhter Wirkungsgrad mit dem Poly-V-Riemen 26B' des Typs PJ-8 erzielt werden. Der Poly-V-Riemen 26B' des Typs PJ-8 hat seine Vorteile insbesondere bei Kämmmaschinen mit bis zu 650 KS/min.

Um das Flattern bzw. Schwingverhalten des Keilrippenriemens 26B noch weiter zu minimieren ist es optional denkbar im Zugtrum 28 eine Umlenkrolle 34 vorzusehen. Dies bewirkt eine Unterteilung des Zugtrums 28 und federt so die unerwünschten Schwingungen im Antriebssystem weiter ab.

Eine weitere Möglichkeit um das Flattern bzw. Schwingverhalten des Keilrippenriemens 26B zu minimieren ist in Fig. 3 durch zwei gestrichelt dargestellte Schwungscheiben 36A, 36B angedeutet.

Die beiden Schwungscheiben 36A, 36B sind auf der Eingangswelle 14 radial aussen zur entsprechenden Getriebe-Riemenscheibe 24A angeordnet und federn so das ungleichmässige Schwingen von der Getriebeeinheit 18 mechanisch ab.

Des Weiteren ist aus Fig. 3 ersichtlich, wie der Poly-V-Riemen 26B' des Typs PJ-8 mit einem gegengleichen 8-Rillenprofil 25 auf der entsprechenden Getriebe-Riemenscheibe 24A zusammen wirkt.

Der Keilrippenriemen 26B, insbesondere Poly-V-Riemen 26B' des Typs PJ-8 entspricht der Norm DIN 7867/ ISO 9982 und weist einen Unterbau, einen Zugstrang und eine Deckplatte auf. Der Unterbau weist keilförmige, parallel in Laufrichtung angeordnete Rippen auf. Diese Rippen gewährleisten einen guten Kraftschluss und eine gleichmässige Kraftverteilung über die gesamte Riemenbreite. Der Unterbau besteht aus einem Elastomer-Werkstoff. Der Zugstrang besteht aus einem Polyestercord bzw. Aramidcord von hoher Festigkeit sowie geringer Dehnung und ist mit dem Unterbau fest verbunden. Die verschleissfeste Druckplatte sorgt für einen dauerhaften Schutz des Zugstrangs.

In Fig. 4 sind rein schematisch drei Kurvenverläufe 38A, 38B, 38C des Drehmomentes des Motors 14 (in Nm) über die Zeit (in ms) gezeigt.

Der erste Kurvenlauf 38A ist punktiert dargestellt und gibt das Drehmomentverhalten des Motors 14 mit dem Doppelkeilriemen 26A gemäss Fig. 1 wieder. Die Drehmomentspitzen am Motor 14 sind mit dem Doppelkeilriemen 26A im arithmetischen Mittel sehr hoch und geben so das sehr starke Schwingverhalten des Antriebssystems wieder.

Der zweite Kurvenverlauf 38B ist gestrichelt dargestellt und gibt das Drehmomentverhalten des Motors 14 mit dem Poly-V-Riemen 26B' des Tpys PJ-8 wieder. Im Vergleich zum ersten Kurvenverlauf 38A mit dem Doppelkeilriemen 26A zeigt der zweite Kurvenverlauf 38B mit dem Poly-V-Riemen 26B' des Typs PJ-8 ein erheblich verbesserten Kurvenverlauf und somit stark reduzierte Drehmomentspitzen am Motor 14. Es konnte im arithmetischen Mittel eine Abfederung des Schwingverhaltens am Antriebssystem von bis zu 11 % bis 20% erreicht werden.

Der dritte Kurvenverlauf 38C ist durchgezogen dargestellt und gibt das Drehmomentverhalten des Motors 14 mit dem Poly-V-Riemen 26B' des Typs PJ-8 mit den beiden Schwungscheiben 36A, 36B gemäss Fig. 3 wieder. Der Einsatz der beiden Schwungscheiben 36A, 36B führt zwar zu einem weiteren mechanischen Abfedern des Schwingverhaltens am Antriebssystem, jedoch hat der Austausch vom Doppelkeilriemen 26A zum Poly-V-Riemen 26B' des Typs PJ-8 eine weitaus höhere Verbesserung erbracht.

An diese Stelle sei erwähnt, dass es auch denkbar wäre, das aus dem Stand der Technik bekannte starke Schwingverhalten am Zugtrum durch den Einsatz eines Zahnriemens als Antriebsmittels zu minimieren. Dies würde in Wechselwirkung mit der Motor-Riemenscheibe und Getrieberiemenscheibe eine formschlüssige Antriebsverbindung bilden, so dass kein Schlupf entsteht. In diesem Zusammenhang müsste jedoch ein frequenzgesteuerter Motor zum Einsatz kommen, wodurch eine derartige Lösung mit sehr viel höheren Kosten verbunden wäre als bei der oben ausgeführten Lösung mit dem Keilrippenriemen, insbesondere Poly-V-Riemen und/oder den beiden Schwungscheiben und/oder der zusätzlichen Umlenkrolle im Zugtrum.

## Patentansprüche

1. Antriebsvorrichtung zwischen einem eine Ausgangswelle (12) aufweisenden Motor (14) und einer eine Eingangswelle (16) aufweisenden Getriebeeinheit (18) einer Kämmmaschine (20) von welcher Arbeitselemente der Kämmmaschine (20) angetrieben werden, wobei auf der Ausgangswelle (12) des Motors (14) eine Motor-Riemenscheibe (22) und auf der Eingangswelle (16) der Getriebeeinheit (18) eine Getriebe-Riemenscheibe (24) angeordnet sind, und wobei ein Antriebsmittel (26) kraftschlüssig mit der Motor-Riemenscheibe (22) und Getriebe-Riemenscheibe (24) zusammenwirkt, **dadurch gekennzeichnet, dass** das Antriebsmittel (26) als Keilrippenriemen (26B), insbesondere Poly-V-Riemen (26B'), ausgebildet ist.

2. Antriebsvorrichtung nach Anspruch 1, **dadurch gekennzeichnet, dass** der Keilrippenriemen (26B) ein PJ-Profil mit zwischen 5 und 10 Rippen, vorzugsweise zwischen 7 und 9 Rippen, und besonders bevorzugt 8 Rippen aufweist.

3. Antriebsvorrichtung nach Anspruch 1 oder 2, **dadurch gekennzeichnet, dass** die Motor-Riemenscheibe (22) und die Getriebe-Riemenscheibe (24, 24A) auf ihrem jeweiligen äusseren Umfang ein gegengleiches Rippenprofil (25) für den Keilrippenriemen (26B) aufweisen.

4. Antriebsvorrichtung nach einem der Ansprüche 1 bis 3, **dadurch gekennzeichnet, dass** auf der Eingangswelle (16) der Getriebeeinheit (18) radial aussen von der Getriebe-Riemenscheibe (24, 24A) mindestens eine Schwungscheibe (36) angeordnet ist.

5. Antriebsvorrichtung nach Anspruch 4, **dadurch gekennzeichnet, dass** die Masseträgheit der mindestens einen Schwungscheibe (36) zwischen etwa 84000 kg*mm² und etwa 85000 kg*mm², vorzugsweise zwischen etwa 84300 kg*mm² und etwa 84800 kg*mm², und besonders bevorzugt bei 84600 kg*mm² liegt.

6. Antriebsvorrichtung nach Anspruch 4 oder 5, **dadurch gekennzeichnet, dass** das Gewicht der mindestens einen Schwungscheibe (36) zwischen etwa 7,0 kg und etwa 7,5 kg, vorzugsweise zwischen etwa 7,2 kg und etwa 7,4 kg, und besonders bevorzugt bei etwa 7,3 kg liegt.

7. Antriebsvorrichtung nach einem der Ansprüche 4 bis 6, **dadurch gekennzeichnet, dass** die Schwungscheibe (36) einstückig oder mehrteilig ausgebildet ist.

8. Antriebsvorrichtung nach einem der Ansprüche 1 bis 7, **dadurch gekennzeichnet, dass** mindestens eine Umlenkrolle (34) mit dem Zugtrum (28) des Antriebsmittels (26, 26A, 26B, 26B') zusammen wirkt.
